# FASCICULE DE BREVET EUROPEEN

(11) **EP 1 799 956 B1**
(45) Date de publication et mention de la délivrance du brevet: **21.08.2013**
(21) Numéro de dépôt: 05800563.8
(22) Date de dépôt: 01.09.2005
(51) Int. Cl.: E21B 21/06

(54) **DISPOSITIF D'EXTRACTION D'AU MOINS UN GAZ CONTENU DANS UNE BOUE DE FORAGE ET ENSEMBLE D'ANALYSE ASSOCIE.**
VORRICHTUNG ZUR EXTRAKTION VON EINEM GAS AUS EINEM SCHLAMM UND ANALYSEVORRICHTUNG
DEVICE FOR EXTRACTING AT LEAST ONE GAS CONTAINED IN A DRILLING MUD AND ASSOCIATED ANALYSIS ASSEMBLY

(30) Priorité: 30.09.2004 FR 0410361
(43) Date de publication de la demande: 27.06.2007
(73) Titulaire: Geoservices Equipements, 93150 Le Blanc-Mesnil (FR)
(72) Inventeur: EVRARD, Jean-François, F-93100 MONTREUIL-SOUS-BOIS (FR)
(74) Mandataire: Blot, Philippe Robert Emile
(86) Numéro de dépôt international: PCT/FR2005/002185
(87) Numéro de publication internationale: WO 2006/035124

(56) Documents cités:
- WO-A-2004/027208
- US-A- 3 255 576
- US-A- 3 633 687
- US-A- 4 666 471
- US-B1- 6 212 948
- US-B1- 6 389 878

## Description

La présente invention concerne un dispositif d'extraction d'au moins un gaz contenu dans une boue de forage, du type comprenant :
- une enceinte ;
- des moyens d'amenée de la boue de forage dans l'enceinte ;
- des moyens d'évacuation de la boue de forage de l'enceinte ;
- des moyens d'introduction d'un gaz vecteur dans l'enceinte ;
- une conduite d'extraction de gaz, débouchant dans la partie supérieure de l'enceinte et reliée, en aval de l'enceinte, à des moyens d'aspiration.

Lors du forage d'un puits de pétrole ou d'un autre effluent (notamment gaz, vapeur, eau), il est connu de réaliser une analyse des composés gazeux contenus dans les boues de forage émergeant du puits. Cette analyse permet de reconstituer la succession géologique des formations traversées lors du forage et intervient dans la détermination des possibilités d'exploitation des gisements de fluides rencontrés.

Cette analyse, réalisée en continu, comprend deux phases principales. La première phase consiste à extraire les gaz véhiculés par la boue (par exemple composés hydrocarbonés, dioxyde de carbone, sulfure d'hydrogène). La deuxième phase consiste à qualifier et quantifier les gaz extraits.

Dans la première phase, des dégazeurs à agitation mécanique du type précité (US-A-4 635 735) sont utilisés de manière fréquente. Les gaz extraits de la boue, mélangés avec le gaz vecteur introduit dans l'enceinte, sont convoyés par aspiration via la conduite d'extraction de gaz jusqu'à un analyseur qui permet la quantification des gaz extraits.

Le document US6389878 décrit un dégazeur de boues provenant d'un forage. Ce document ne décrit pas d'évent dans la conduite d'évacuation des gaz, ni de moyens d'obturation de cet évent.

De tels dispositifs ne donnent pas entière satisfaction. En effet, l'extraction des gaz requiert une forte agitation de la boue dans l'enceinte. Sous l'effet de cette agitation, des résidus de boue sont projetés contre les parois de l'enceinte, et dans certains cas, bouchent la conduite par laquelle le gaz vecteur est introduit dans l'enceinte.

Sous l'effet de l'aspiration par la conduite d'extraction, la pression dans l'enceinte diminue. En deçà d'une valeur critique, la boue est aspirée dans la conduite d'extraction et convoyée à travers cette conduite.

L'analyse des gaz doit alors être interrompue pour remplacer la conduite d'extraction et nettoyer les moyens d'analyse, s'ils ont été pollués.

L'invention a donc pour but principal d'augmenter la fiabilité de l'extraction et de l'analyse des gaz contenus dans une boue de forage.

A cet effet, l'invention a pour objet un dispositif du type précité, caractérisé en ce qu'il comprend en outre des moyens de mise à l'évent sélective comportant :
- une conduite d'évent, piquée sur la conduite d'extraction ;
- des moyens d'obturation de la conduite d'évent, adaptés pour ouvrir cette conduite d'évent lorsque la pression en au moins un point prédéterminé du dispositif est inférieure à une valeur de consigne prédéterminée.

Le dispositif selon l'invention peut comporter une ou plusieurs des caractéristiques suivantes, prises isolément ou suivant toutes combinaisons techniquement possibles :
- lesdits moyens d'obturation sont adaptés pour ouvrir la conduite d'évent de manière autonome ;
- le point prédéterminé est disposé sur la conduite d'évent, entre les moyens d'obturation et la conduite d'extraction ;
- les moyens d'obturation comprennent un liquide ;
- la conduite d'évent comprend une partie formant siphon, ledit liquide étant disposé dans ladite partie formant siphon lorsque la pression au point déterminé est supérieure à ladite valeur de consigne ;
- le volume interne de ladite partie formant siphon est inférieur à 10% du volume interne de l'enceinte ; et
- lesdits moyens d'introduction d'un gaz vecteur dans l'enceinte comprennent une prise d'air à pression atmosphérique, la différence entre la valeur de consigne et la pression atmosphérique étant inférieure à 50 mbars.

L'invention a en outre pour objet un ensemble d'analyse d'au moins un gaz contenu dans une boue de forage, du type comprenant :
- des moyens de prélèvement de boue ;
- un dispositif d'extraction tel que défini ci-dessus, les moyens de prélèvement débouchant dans lesdits moyens d'amenée de la boue ;
- des moyens d'analyse du gaz, reliés à ladite conduite d'extraction.

Un exemple de mise en oeuvre de l'invention va maintenant être décrit en regard des dessins annexés, sur lesquels :
- la Figure 1 est une vue schématique en coupe verticale d'une installation de forage, munie d'un ensemble d'analyse selon l'invention ; et
- la Figure 2 est une vue schématique, en coupe verticale des principaux éléments de l'ensemble d'analyse selon l'invention.

Dans tout ce qui suit, les termes « amont » et « aval » s'entendent par rapport au sens de circulation d'un fluide dans une conduite.

Un ensemble d'analyse selon l'invention est utilisé par exemple dans une installation de forage d'un puits de production de pétrole.

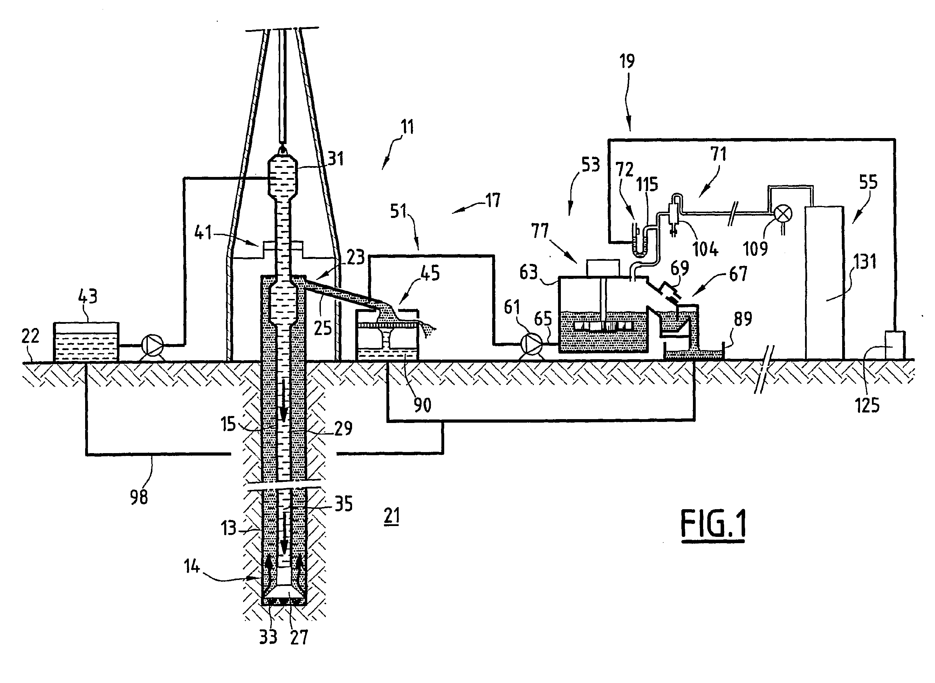

Comme illustré sur la Figure 1, cette installation 11 comprend un conduit de forage 13 dans une cavité 14 percée par un outil de forage 15 rotatif, une installation de surface 17, et un ensemble d'analyse 19 selon l'invention.

Le conduit de forage 13 est disposé dans la cavité 14 percée dans le sous-sol 21 par l'outil de forage 15 rotatif. Ce conduit 13 comporte, au niveau de la surface 22, une tête de puits 23 munie d'une conduite 25 de vidange.

L'outil de forage 15 comprend une tête de forage 27, une garniture de forage 29, et une tête 31 d'injection de liquide.

La tête de forage 27 comprend des moyens de perçage 33 des roches du sous-sol 21. Elle est montée sur la partie inférieure de la garniture de forage 29 et est positionnée dans le fond du conduit de forage 13.

La garniture 29 comprend un ensemble de tubes de forage creux. Ces tubes délimitent un espace interne 35 qui permet d'amener un liquide depuis la surface 22 jusqu'à la tête de forage 27. A cet effet, la tête d'injection 31 de liquide est vissée sur la partie supérieure de la garniture 29.

L'installation de surface 17 comprend des moyens 41 de support et d'entraînement en rotation de l'outil de forage 15, des moyens 43 d'injection du liquide de forage et un tamis vibrant 45.

Les moyens d'injection 43 sont reliés hydrauliquement à la tête d'injection 31 pour introduire et faire circuler un liquide dans l'espace interne 35 de la garniture de forage 29.

Le tamis vibrant 45 collecte le liquide chargé de résidus de forage qui sort de la conduite de vidange 25 et sépare le liquide des résidus de forage solides.

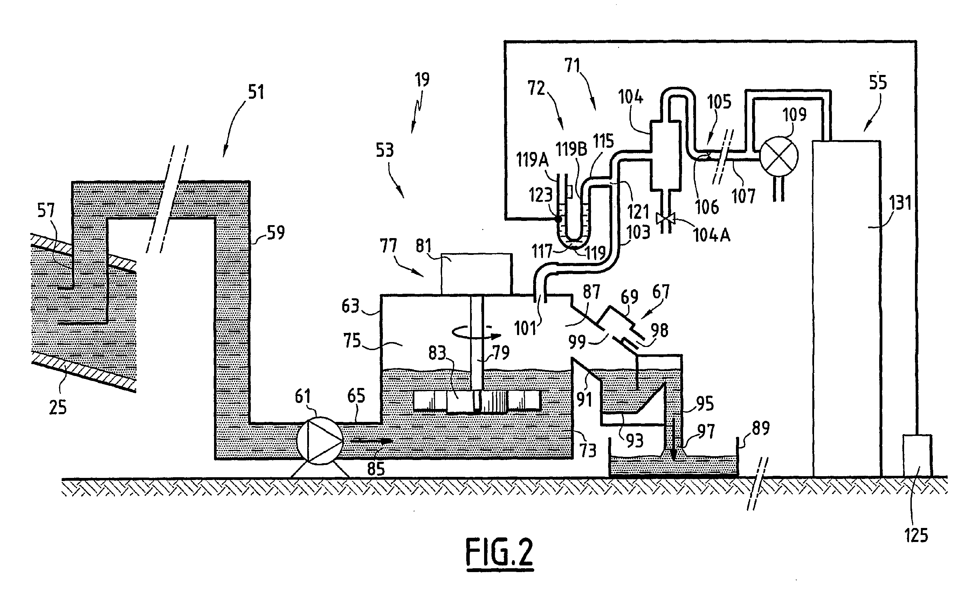

Comme illustré sur la Figure 2, l'ensemble d'analyse 19 comprend des moyens 51 de prélèvement de la boue, piqués sur la conduite de vidange 25, un dispositif 53 d'extraction de gaz, et des moyens 55 d'analyse des gaz extraits. En variante, les moyens de prélèvement 51 sont piqués dans une cuve de réception du liquide dans laquelle débouche la conduite de vidange 25.

Les moyens de prélèvement 51 comprennent une tête 57 de prélèvement de liquide, disposée en saillie dans la conduite de vidange 25, une tubulure 59 de raccordement, et une pompe péristaltique 61 dont le débit est réglable.

Le dispositif d'extraction 53 comprend une enceinte 63, une conduite 65 d'amenée de boue dans l'enceinte 63, une conduite 67 d'évacuation de la boue de l'enceinte 63, des moyens 69 d'introduction d'un gaz vecteur dans l'enceinte 63, une conduite 71 d'extraction des gaz extraits hors de l'enceinte 63 et des moyens 72 de mise à l'évent sélective.

L'enceinte 63 comporte un récipient étanche dont le volume interne est par exemple compris entre 0,04 litre et 0,3 litre ou entre 0,3 litre et 3 litre. Cette enceinte 63 comprend une partie inférieure 73, dans laquelle la boue circule et une partie supérieure 75 qui présente un ciel gazeux. L'enceinte 63 est par ailleurs munie de moyens d'agitation 77, comprenant un agitateur 79, monté en saillie dans l'enceinte 63 et entraîné en rotation par un moteur 81 monté sur la partie supérieure 75 de l'enceinte 63. L'agitateur 79 comprend un mobile d'agitation 83 plongé dans la boue.

La conduite 65 d'amenée de boue s'étend entre la sortie de la pompe péristaltique 61 et une ouverture d'entrée 85, ménagée dans la partie inférieure 73 de l'enceinte 63.

Cette conduite d'amenée 65 peut être munie de moyens de chauffage de la boue (non représentés), afin de porter la température de cette boue à des valeurs comprises entre 25 et 120°C, de préférence entre 60 et 90°C.

La conduite d'évacuation 67 s'étend entre un passage 87 à débordement, ménagé dans la partie supérieure 75 de l'enceinte 63, et un bac de rétention 89 destiné à recevoir les boues évacuées du dispositif 53.

En variante, le bac de rétention 89 est formé par la cuve de réception 90 des liquides extraits du tamis vibrant 45.

La conduite d'évacuation 67 comprend successivement une partie amont 91 inclinée vers le bas, qui forme un angle de 45° environ avec l'horizontale, une partie coudée 93 formant siphon, et une partie aval 95 sensiblement verticale, ouverte à son extrémité inférieure 97 disposée en regard du bac 89, au-dessus du niveau du liquide contenu dans le bac 89.

La boue introduite dans l'enceinte 63 via la conduite d'amenée 65, est évacuée par débordement dans la conduite d'évacuation 67 à travers le passage à débordement 87. Par ailleurs, une partie de la boue évacuée réside temporairement dans le siphon 93 de la conduite d'évacuation 67, ce qui permet d'éviter l'entrée de gaz dans la partie supérieure 75 de l'enceinte 63 par l'extrémité inférieure 97 de la conduite d'évacuation 67. L'introduction de gaz dans l'enceinte 63 s'effectue donc uniquement par les moyens d'introduction de gaz vecteur 69.

La boue collectée dans le bac de rétention 89 et dans la cuve 90 est recyclée vers les moyens d'injection 43 par une conduite 98 de recirculation de boue.

Les moyens 69 d'introduction d'un gaz vecteur dans l'enceinte comprennent une prise d'air 98 montée sur la partie amont 91 de la conduite d'évacuation 67. Cette prise d'air 98 débouche dans un passage 99 d'injection sur la conduite d'évacuation.

Dans l'exemple illustré, le gaz vecteur est constitué par l'air environnant autour de l'installation, à la pression atmosphérique, de sorte que la pression dans l'enceinte 63 est maintenue sensiblement constante à la pression atmosphérique, lorsque le passage d'injection 99 est ouvert.

La conduite d'extraction 71 s'étend entre une ouverture d'extraction 101, ménagée dans la partie supérieure 75 de l'enceinte, et les moyens d'analyse 55. Elle comprend, d'amont en aval, une partie amont 103, un pot de récupération de liquide 104, un régulateur de débit volumique 105, une ligne de transport 107, et des moyens d'aspiration 109.

Le pot de récupération 104 présente une ouverture de réception dans laquelle débouche la partie amont 103, et dans sa partie supérieure, une ouverture d'évacuation reliée au régulateur 105.

En variante, un étage de filtration est interposé entre le pot 104 et le régulateur 105.

Le pot 104 est muni à sa base d'une conduite de vidange 104A équipée d'une vanne.

Le régulateur de débit 105 est formé par un tube présentant un étranglement 106 de section transversale calibrée.

La ligne de transport 107 relie l'enceinte 63, disposée au voisinage de la tête de puits 23, en zone explosive, aux moyens d'analyse 55, disposés à l'écart de la tête de puits 23, dans une zone non-explosive, par exemple dans une cabine pressurisée.

Cette ligne de transport 107 peut être réalisée à base d'un matériau polymère, notamment le polyéthylène, et présente par exemple une longueur variant entre 10 m et 500 m.

Les moyens d'aspiration 109 comprennent une pompe à vide qui permet le convoyage par aspiration des gaz extraits de l'enceinte 63 jusqu'aux moyens d'analyse 55.

Les moyens 72 de mise à l'évent sélective comprennent une conduite d'évent 115, et des moyens 117 d'obturation de la conduite d'évent 115.

La conduite d'évent 115 est piquée sur la partie amont 103 de la conduite d'extraction 71, entre le pot de récupération 104 et l'ouverture d'extraction 101.

Elle comprend une partie 119 formant siphon qui présente deux colonnes 119A et 119B parallèles, reliées entre elles par leurs extrémités inférieures.

La colonne 119B de droite sur la Figure 2 est reliée à la conduite d'extraction 71 par un segment de conduite sensiblement horizontal. La colonne de gauche 119A sur la Figure 2 est reliée à un évent, qui peut être le gaz environnant l'installation 19, ou un réservoir d'un gaz neutre.

Les moyens d'obturation 117 comportent un liquide disposé dans la partie 119 formant siphon de la conduite d'évent 115.

Le liquide disposé dans les colonnes 119A et 119B est constitué par un liquide de nettoyage, par exemple l'eau, ou bien par un liquide peu volatil, par exemple une huile. Plus généralement, ce liquide ne génère pas de composés gazeux susceptibles d'interférer avec les composés à quantifier par les moyens d'analyse 55, notamment les hydrocarbures en Ci à C₈ et les composés aromatiques comme le benzène, le toluène et le xylène.

La hauteur de liquide dans les colonnes 119A et 119B est choisie de sorte que, lorsque la pression au point 121 de piquage entre la conduite d'évent 115 et la conduite d'extraction 71 est inférieure à une valeur de consigne prédéterminée, le liquide dans la conduite d'évent 115 est aspiré et s'écoule dans la conduite d'extraction 71.

La différence entre la valeur de consigne et la pression atmosphérique est comprise entre 0 mbar et 50 mbar, notamment entre 10 mbar et 40 mbar.

Par ailleurs, le volume interne des colonnes 119A et 119B est choisi, de sorte que le volume de liquide nécessaire pour obturer la conduite d'évent 115 est inférieur à 10% du volume interne de l'enceinte 63. Le volume de liquide est par ailleurs inférieur au volume du pot de récupération de liquide 104.

La colonne de gauche 119A est munie d'un capteur 123 de détection de liquide dans la colonne 119A, relié électriquement à des moyens 125 de commande de l'ensemble 19. Lorsque le capteur 123 détecte l'absence de liquide dans la colonne 119A, il génère un signal d'alarme qui est transmis aux moyens de commande 125.

Les moyens d'analyse 55 comprennent une instrumentation 131 qui permet la détection et la quantification d'un ou plusieurs gaz extraits.

Cette instrumentation 131 comprend par exemple des appareils à détection infrarouge pour la quantification du dioxyde de carbone, des chromatographes FID (détecteur à ionisation de flammes) pour la détection des hydrocarbures ou encore TCD (détecteur à conductivité thermique), en fonction des gaz à analyser. Elle comprend également un système de chromatographie gaz couplé à un spectromètre de masse, ce système étant désigné par l'abréviation anglaise « GC-MS ». La détection et la quantification simultanée d'une pluralité de gaz est donc possible.

Ces moyens 131 sont reliés à un piquage sur la ligne 107 situé en amont de la pompe à vide 109, au voisinage de cette pompe 109.

Le fonctionnement de l'ensemble d'analyse 19 selon l'invention, lors du forage d'un puits va maintenant être décrit comme exemple, en référence à la Figure 1.

Pour effectuer le forage, l'outil de forage 15 est entraîné en rotation par l'installation de surface 41. Un liquide de forage est introduit dans l'espace intérieur 35 de la garniture de forage 29 par les moyens d'injection 43. Ce liquide descend jusqu'à la tête de forage 27, et passe dans le conduit de forage 13 à travers la tête de forage 27. Ce liquide refroidit et lubrifie les moyens de perçage 33. Puis, le liquide collecte les déblais solides résultant du forage et remonte par l'espace annulaire défini entre la garniture de forage 29 et les parois du conduit de forage 13, puis est évacué par la conduite de vidange 25.

En référence à la Figure 2, la pompe péristaltique 61 est alors activée, afin de prélever, de manière continue, une fraction déterminée de la boue de forage circulant dans la conduite 25.

Cette fraction de boue est convoyée jusqu'à l'enceinte 63 via la conduite d'amenée 65.

L'agitateur 79 est entraîné en rotation par le moteur 81, et agite la boue dans la partie inférieure 73 de l'enceinte 63 pour provoquer l'extraction des gaz contenus dans cette boue, ainsi que le mélange des gaz extraits avec le gaz vecteur aspiré par le passage d'injection 99.

Le mélange gazeux est extrait via la conduite d'extraction 71, sous l'effet de l'aspiration produite par la pompe à vide 89. Ce mélange est convoyé jusqu'aux moyens d'analyse 55, où il est qualifié et quantifié par l'instrumentation 131.

Lorsque des résidus de boue projetés sur les parois de l'enceinte 63 et de la conduite d'évacuation 67 bouchent le passage d'injection 99, l'aspiration du mélange gazeux hors de l'enceinte 63 par la pompe à vide 109 n'est pas compensée par l'introduction de gaz vecteur dans l'enceinte 63. Par suite, la pression dans l'enceinte 63 et dans la conduite d'extraction 71 diminue.

Lorsque la pression dans la conduite d'extraction 71 diminue sous la valeur de consigne, en particulier au point de piquage 121, le liquide contenu dans la conduite de mise à l'évent 115 est aspiré dans la conduite d'extraction 71.

Lorsque la totalité de ce liquide est passée dans la conduite d'extraction 71, la conduite d'évent 115 est dégagée. Le liquide est recueilli dans le pot de récupération 104. La conduite d'extraction 71 est reliée à l'évent, et la valeur de la pression dans la partie amont 103 de la conduite 71, puis dans l'enceinte 63 remonte de manière quasi-immédiate à la pression atmosphérique.

De ce fait, seul le liquide contenu initialement dans la conduite d'évent 115 est aspiré dans la conduite d'extraction 71. Par suite, l'engorgement de cette conduite 71 ou/et des moyens d'analyse 55 par la boue de forage est évité.

Les moyens d'obturation 117 sont adaptés pour ouvrir la conduite d'évent 115 de manière autonome, lorsque la pression au point 121 est inférieure à la valeur de consigne.

Le capteur de détection 123 détecte alors l'absence de liquide dans la colonne de gauche 119A et transmet un signal d'alarme aux moyens d'alarme 125.

Le passage d'injection 99 est alors nettoyé par un opérateur ou par un dispositif de nettoyage automatisé, puis une quantité prédéterminée de liquide est introduite dans la conduite d'évent 115 afin de l'obturer.

L'ensemble d'analyse 19 est remis en service de manière très rapide, sans qu'il soit nécessaire de nettoyer, voire de remplacer la conduite d'extraction 71, la pompe à vide 109, et/ou l'instrumentation 131 des moyens d'analyse 55.

En variante, les moyens d'obturation 117 comprennent un clapet frangible ou une vanne commandée par la pression.

Dans ce dernier cas, l'ouverture de la vanne peut être commandée lorsque la pression en un point de la partie amont 103 est inférieure à la valeur de consigne prédéterminée.

Grâce au dispositif d'extraction 53 selon l'invention, il est possible de disposer d'un ensemble particulièrement fiable pour extraire et analyser les gaz contenus dans une boue de forage.

Ce dispositif 53 permet, par des moyens simples et peu coûteux, d'éviter l'engorgement de la conduite d'extraction 71 par la boue de forage, ce qui augmente la productivité et la sécurité du forage.

## Revendications

1. Dispositif (53) d'extraction d'au moins un gaz contenu dans une boue de forage, du type comprenant :
- une enceinte (63) ;
- des moyens (65) d'amenée de la boue de forage dans l'enceinte (63) ;
- des moyens (67) d'évacuation de la boue de forage de l'enceinte (63) ;
- des moyens (69) d'introduction d'un gaz vecteur dans l'enceinte (63) ;
- une conduite (71) d'extraction de gaz, débouchant dans la partie supérieure (75) de l'enceinte et reliée, en aval de l'enceinte (63), à des moyens (109) d'aspiration ;
**caractérisé en ce qu'**il comprend en outre des moyens (72) de mise à l'évent sélective comportant :
• une conduite (115) d'évent, piquée sur la conduite d'extraction (71) ;
• des moyens (117) d'obturation de la conduite d'évent (115), adaptés pour ouvrir cette conduite d'évent (115) lorsque la pression en au moins un point (121) prédéterminé du dispositif est inférieure à une valeur de consigne prédéterminée.

2. Dispositif (53) selon la revendication 1, **caractérisé en ce que** lesdits moyens d'obturation (117) sont adaptés pour ouvrir la conduite d'évent (115) de manière autonome.

3. Dispositif (53) selon l'une des revendications 1 ou 2, **caractérisé en ce que** le point prédéterminé (121) est disposé sur la conduite d'évent (115), entre les moyens d'obturation (117) et la conduite d'extraction (71).

4. Dispositif (53) selon l'une quelconque des revendications précédentes, **caractérisé en ce que** les moyens d'obturation (117) comprennent un liquide.

5. Dispositif (53) selon la revendication 4, **caractérisé en ce que** la conduite d'évent (115) comprend une partie (119) formant siphon, ledit liquide étant disposé dans ladite partie (119) formant siphon lorsque la pression au point déterminé (121) est supérieure à ladite valeur de consigne.

6. Dispositif (53) selon l'une quelconque des revendications 4 ou 5, **caractérisé en ce que** le volume interne de ladite partie (119) formant siphon est inférieur à 10% du volume interne de l'enceinte (63).

7. Dispositif (53) selon l'une quelconque des revendication précédentes, **caractérisé en ce que** lesdits moyens (67) d'introduction d'un gaz vecteur dans l'enceinte comprennent une prise (98) d'air à pression atmosphérique, la différence entre la valeur de consigne et la pression atmosphérique étant inférieure à 50 mbars.

8. Ensemble d'analyse (19) d'au moins un gaz contenu dans une boue de forage, **caractérisé en ce qu'**il comprend :
- des moyens (51) de prélèvement de boue de forage ;
- un dispositif (53) selon l'une quelconque des revendications précédentes, les moyens de prélèvement (51) débouchant dans lesdits moyens d'amenée (65) de la boue ;
- des moyens (55) d'analyse du gaz, reliés à ladite conduite d'extraction (71).

## Patentansprüche

1. Vorrichtung (53) zur Extraktion von mindestens einem Gas, das in Bohrschlamm enthalten ist, von dem Typ, der folgendes aufweist:
- einen Behälter (63);
- Einrichtungen (65) für die Zuführung des Bohrschiammes in den Behälter (63);
- Einrichtungen (67) für das Austragen des Bohrschlammes aus dem Behälter (63);
- Einrichtungen (69) für die Einleitung eines Schleppgases in den Behälter (63);
- eine Leitung (71) zur Extraktion des Gases, die in den oberen Teil (75) des Behälters mündet und die stromabwärts von dem Behälter (63) mit Einrichtungen (109) zur Ansaugung verbunden ist;
**dadurch gekennzeichnet,**
**dass** sie weiterhin Elemente (72) zur selektiven Entlüftung aufweist, die folgendes umfassen:
- eine Leitung (115) zur Entlüftung, die an die Leitung (71) zur Extraktion anschlossen ist;
- Elemente (117) zum Verschließen der Entlüftungsleitung (115), die so ausgelegt sind, dass sie diese Entlüftungsleitung (115) öffnen, wenn der Druck an mindestens einer vorgegebenen Stelle (121) der Vorrichtung unter einem vorgegebenen Einstellwert liegt.

2. Vorrichtung (53) nach Anspruch 1,
**dadurch gekennzeichnet,**
**dass** die Elemente zum Verschließen (117) so ausgelegt sind, dass sie die Entlüftungsleitung (115) selbständig öffnen.

3. Vorrichtung (53) nach einem der Ansprüche 1 oder 2,
**dadurch gekennzeichnet,**
**dass** die vorgegebene Stelle (121) sich an der Entlüftungsleitung (115) zwischen den Elementen zum Verschließen (117) und der Extraktionsleitung (71) befindet.

4. Vorrichtung (53) nach einem der vorhergehenden Ansprüche,
**dadurch gekennzeichnet,**
**dass** die Elemente zum Verschließen (117) eine Flüssigkeit aufweisen.

5. Vorrichtung (53) nach Anspruch 4,
**dadurch gekennzeichnet,**
**dass** die Entlüftungsleitung (115) einen Bereich (119) aufweist, der einen Siphon bildet, wobei die Flüssigkeit in dem Bereich angeordnet ist, der den Siphon bildet, wenn der Druck an der vorgegebenen Stelle (121) höher ist als der Einstellwert.

6. Vorrichtung (53) nach einem der Ansprüche 4 oder 5,
**dadurch gekennzeichnet,**
**dass** das innere Volumen des Bereiches (119), der den Siphon bildet, kleiner ist als 10 % des inneren Volumens des Behälters (63).

7. Vorrichtung (53) nach einem der vorhergehenden Ansprüche,
**dadurch gekennzeichnet,**
**dass** die Einrichtungen (67) zur Einleitung eines Schleppgases in den Behälter (63) einen Luftanschluss (98) mit Atmosphärendruck aufweisen, wobei die Differenz zwischen dem Einstellwert und dem Atmosphärendruck weniger als 50 mbar beträgt.

8. Analysevorrichtung (19) für mindestens ein Gas, das in Bohrschlamm enthalten ist,
**dadurch gekennzeichnet,**
**dass** sie folgendes aufweist:
- Einrichtungen (51) zur Entnahme von Bohrschlamm;
- eine Vorrichtung (53) nach einem der vorhergehenden Ansprüche, wobei die Entnahmeeinrichtungen (51) in die Zuführungeinrichtungen (65) für den Schlamm münden;
- Einrichtungen (55) zur Analyse des Gases, die mit der Extraktionsleitung (71) verbunden sind.

## Claims

1. Device (53) for extracting at least one gas contained in a drilling mud, of the type comprising:
- an enclosure (63);
- means (65) for supplying the drilling mud into the enclosure (63);
- means (67) for removing the drilling mud from the enclosure (63);
- means (69) for introducing a carrier gas into the enclosure (63);
- a pipe (71) for extracting the gas, opening into the upper part (75) of the enclosure and connected downstream of the enclosure (63) to suction means (109);
**characterized in that** it also comprises means (72) for selective venting, comprising:
• a vent pipe (115) tapped into the extraction pipe (71):
• means (117) for closing the vent pipe (115), suitable for opening this vent pipe (115) when the pressure at at least one predetermined point (121) of the device is less than a predetermined set value.

2. Device (53) according to claim 1, **characterized in that** the said closing means (117) are suitable for opening the vent pipe (115) in an autonomous manner.

3. Device (53) according to one of claims 1 or 2, **characterized in that** the predetermined point (121) is located on the vent pipe (115) between the closing means (117) and the extraction pipe (71).

4. Device (53) according to any one of the preceding claims, **characterized in that** the closing means (117) comprise a liquid.

5. Device (53) according to claim 4, **characterized in that** the vent pipe (115) comprises a part (119) forming a siphon, the said liquid being located in the said part (119) forming a siphon when the pressure at the determined point (121) is greater than the said set value.

6. Device (53) according to one of claims 4 or 5, **characterized in that** the internal volume of the said part (119) forming a siphon is less than 10 % of the internal volume of the enclosure (63).

7. Device (53) according to any one of the preceding claims, **characterized in that** the said means (67) for introducing a carrier gas into the enclosure comprise an intake (98) for air at atmospheric pressure, the difference between the set value and atmospheric pressure being less than 50 mbar.

8. Assembly (19) for analysis of at least one gas contained in a drilling mud, **characterized in that** it comprises:
- means (51) for sampling the drilling mud;
- a device (53) according to any one of the preceding claims, the sampling means (51) opening into the said mud-supplying means (65);
- means (55) for analysing the gas which are connected to the said extraction pipe (71).
